# EUROPÄISCHE PATENTANMELDUNG

(11) **EP 3 141 121 A1**
(43) Veröffentlichungstag der Anmeldung: **15.03.2017**
(21) Anmeldenummer: 16188086.9
(22) Anmeldetag: 09.09.2016
(51) Int. Cl.: A21B 3/07, A21C 9/08

(54) **ETAGENOFEN MIT AUTOMATISIERTER BESCHICKUNG**

(30) Priorität: 10.09.2015 DE 102015217321
(71) Anmelder: Daub Backtechnik GmbH, 21147 Hamburg (DE)
(72) Erfinder: FLISZAR, Günther, 27149 Kalbe (DE); OTTENBERG, Markus, 210763 Hamburg (DE); RANFT, Andreas, 44809 Bochum (DE)
(74) Vertreter: Glawe, Delfs, Moll

(57) **Zusammenfassung**

Die Erfindung betrifft einen Etagenofen mit automatisierter Beschickung.

Der Etagenofen (1) umfasst mehrere übereinander angeordnete Backräume (2) mit jeweils einem durch eine vordere Backraumöffnung (4) herausziehbaren Backgutträger (10) zur Aufnahme von Teiglingen (50) und einer gegenüber der Backraumöffnung (4) angeordneten Rückwand (2), und einen Auszugslader (20) mit einem vertikal verfahrbaren Ladertisch (21) und einer daran angeordneten Horizontalfördereinheit (22) zum vollständigen Herausziehen eines Backgutträgers (10) durch die Backraumöffnung (4) eines Backraums (2) auf den Ladertisch (21) sowie zum vollständigen Einschieben eines Backgutträgers (10) von dem Ladertisch (21) durch die Backraumöffnung (4) in einen Backraum (2), wobei der Ladertisch (21) für Backgutträger (10) auf der vom Etagenofen (1) abgewandten Seite (24) anschlagsfrei ist und eine Beschickungsvorrichtung (30) mit einer Backgutträgeraufnahme (31) zur wenigstens teilweisen Aufnahme eines Backgutträgers (10) und einer oberhalb der Backgutträgeraufnahme (31) angeordneten Beladevorrichtung (32) zum Beladen eines in der Backgutträgeraufnahme (31) befindlichen Backgutträgers (10) mit Teiglingen derart angeordnet ist, dass ein Backgutträger (10) vom Ladertisch (21) über die anschlagsfreie Seite (24) in einer vorgegebene vertikalen Position wenigstens teilweise in die Backgutträgeraufnahme (31) der Beschickungsvorrichtung (30) und aus dieser heraus verfahrbar ist.

## Beschreibung

Die Erfindung betrifft einen Etagenofen mit automatisierter Beschickung.

Etagenöfen sind die typischen Öfen, die bei der handwerklichen Herstellung von Backwaren verwendet werden. Sie umfassen mehrere übereinander angeordnete, in sich geschlossene Backkammern, die einzeln durch gesonderte Backkammertüren zugänglich sind.

Bei kleineren Etagenöfen kann die Be- und Entladung der einzelnen Backkammern manuell erfolgen. Insbesondere bei größeren Etagenöfen mit bspw. mehr als 5 Etagen, bei denen die oberen Etagen nicht mehr manuell be- und entladen werden können, sind verschiedene konstruktive Maßnahmen bekannt, die eine teil- oder vollautomatisierte Beschickung der einzelnen Backkammern ermöglichen.

Unter anderem ist bekannt, Etagenöfen mit Auszügen auszugestalten, bei denen die gesamte Backfläche einer Backkammer aus der Kammer herausgezogen und anschließend vertikal auf eine Höhe verfahren wird, auf der eine manuelle Belegung der Backfläche mit Teiglingen - insbesondere von den beiden Seiten der Backfläche - möglich ist. Anschließend wird die Backfläche wieder in die Backkammer befördert. Nachteilig an diesem Stand der Technik ist, dass eine zeitintensive manuelle Belegung der Backfläche erforderlich ist, während der keine andere Backkammer be- oder entladen werden kann.

Für eine automatisierte Beschickung von Etagenöfen sind weiterhin Bedienroboter mit einem Förderband zur Aufnahme von Teiglingen bekannt. Das Förderband kann derart verfahren werden, dass es in eine Backkammer hineinragt. Wird eine entsprechende Fördergeschwindigkeit beim Herausziehen des Förderbandes aus der Backkammer gewählt, können die auf dem Förderband befindlichen Teiglinge auf der Backfläche der Backkammer abgelegt werden. Umgekehrt können fertig gebackene Backwaren nach Abschluss des Backvorgangs von dem Förderband aufgekrabbelt und aus der Backkammer entladen werden. Nachteilig an diesem Stand der Technik ist, dass nicht alle Teigwaren für das Be- und Entladen mit Förderband geeignet sind. Weiterhin kann es in den Fällen, in denen Backwaren nicht erfolgreich aufgekrabbelt werden, zu Bränden in einer Backkammer kommen.

Der Erfindung liegt die Aufgabe zugrunde, einen Etagenofen zu schaffen, bei dem die aus dem Stand der Technik bekannten Nachteile nicht mehr oder nur noch im verminderten Umfang auftreten.

Gelöst wird diese Aufgabe durch einen Etagenofen gemäß dem Hauptanspruch. Vorteilhafte Weiterbildungen sind Gegenstand der abhängigen Ansprüche.

Demnach betrifft die Erfindung einen Etagenofen umfassend mehrere übereinander angeordnete Backräume mit jeweils einem durch eine vordere Backraumöffnung herausziehbaren Backgutträger zur Aufnahme von Teiglingen und einer gegenüber der Backraumöffnung angeordneten Rückwand, und einen Auszugslader mit einem vertikal verfahrbaren Ladertisch und einer daran angeordneten Horizontalfördereinheit zum vollständigen Herausziehen eines Backgutträgers durch die Backraumöffnung eines Backraums auf den Ladertisch sowie zum vollständigen Einschieben eines Backgutträgers von dem Ladertisch durch die Backraumöffnung in einen Backraum, wobei der Ladertisch für Backgutträger auf der vom Etagenofen abgewandten Seite anschlagsfrei ist und eine Beschickungsvorrichtung mit einer Backgutträgeraufnahme zur wenigstens teilweisen Aufnahme eines Backgutträgers und einer oberhalb der Backgutträgeraufnahme angeordneten Beladevorrichtung zum Beladen eines in der Backgutträgeraufnahme befindlichen Backgutträgers mit Teiglingen derart angeordnet ist, dass ein Backgutträger vom Ladertisch über die anschlagsfreie Seite in einer vorgegebene vertikalen Position wenigstens teilweise in die Backgutträgeraufnahme der Beschickungsvorrichtung und aus dieser heraus verfahrbar ist.

Bei dem erfindungsgemäßen Etagenofen erfolgt die letztendliche Beschickung der einzelnen Backräume nach dem aus dem Stand der Technik bekannten Prinzip, bei dem der gesamte Backgutträger mit darauf befindlichen Teiglingen oder fertig gebackenen Backwaren vollständig aus dem Backraum heraus oder in diesen hineinverfahren wird. Allerdings wird durch die Erfindung eine in diesem Zusammenhang aus dem Stand der Technik nicht bekannte automatisierte Beladung der Backgutträger mit Teiglingen ermöglicht.

Hierzu ist zunächst vorgesehen, dass der Ladertisch für Backgutträger auf der vom Etagenofen abgewandten Seite anschlagsfrei ist. Ein Backgutträger kann demnach also nicht nur auf der Seite des Etagenofens auf den Ladertisch und von diesem herunter bewegt werden - wie es für das Herausziehen und Einschieben des Backgutträgers aus bzw. in einen Backraum zwingend erforderlich ist. Vielmehr ist es auch möglich, dass der Backgutträger auf der gegenüberliegenden Seite teilweise oder vollständig vom Ladertisch herunter oder auf diesen herauf bewegt wird.

Die erfindungsgemäß weiterhin vorgesehene Beschickungsvorrichtung ist so angeordnet, dass ein Backgutträger von dem Ladertisch über die beschriebene anschlagfreie Seite des Ladertisches in die Backgutträgeraufnahme der Beschickungsvorrichtung verfahren werden kann. Dazu ist es lediglich erforderlich, dass der Ladertisch des Auszugladers auf eine vorgegebene vertikale Position verfahren wird. Die Backgutträgeraufnahme kann bspw. als Rollenbahn oder umlaufendes Förderband ausgestaltet sein.

Die oberhalb der Backgutträgeraufnahme der Beschickungsvorrichtung angeordnete Beladevorrichtung ist dazu vorgesehen, einen in der Backgutträgeraufnahme befindlichen Backgutträger mit Teiglingen zu beladen. Insbesondere kann die Beladung mit Teiglingen beim Verfahren eines Backgutträgers in die oder aus der Backgutträgeraufnahme erfolgen.

Der erfindungsgemäße Etagenofen bietet den Vorteil, dass während der Auszugslader einen Backgutträger noch bereitstellt, die Beladevorrichtung bereits mit Teiglingen bestückt werden kann. Die eigentliche Beladung des Backgutträgers erfolgt nach seiner Bereitstellung dann automatisiert. Während der beladene Backgutträger in einen Backraum eingeschoben und ein weiterer Backgutträger bereitgestellt wird, kann die Beladevorrichtung bereits erneut mit Teiglingen bestückt werden. Das Beschicken des erfindungsgemäßen Etagenofens kann gegenüber einem Auszug-Etagenofen gemäß dem Stand der Technik also beschleunigt werden, da insbesondere die Wartezeit für die Bereitstellung eines Backgutträgers und die daran anschließende Zeit zum manuellen Bestücken des Backgutträgers mit Teiglingen wegfällt bzw. verkürzt wird.

Gleichzeitig bietet der erfindungsgemäße Etagenofen weiterhin die grundsätzliche Möglichkeit, einen auf dem Ladertisch befindlichen Backgutträger insbesondere von den beiden Seiten, an denen weder der Etagenofen selbst noch die Beschickungsvorrichtung angeordnet ist, manuell zu beladen. Dadurch lässt sich der erfindungsgemäße Etagenofen auch für solche Backwaren nutzen, deren Teiglinge nicht über die Beschickungsvorrichtung auf einen Backgutträger geladen werden können. Hierzu ist es bevorzugt, wenn der Ladertisch zu wenigstens einer Seite des Etagenofens zum manuellen Beladen eines darauf befindlichen Backgutträgers mit Teiglingen zugangsfrei ist.

Die am Ladertisch des Auszugsladers vorgesehene Horizontalfördereinheit umfasst vorzugsweise ein Kupplungselement, welches zur wahlweisen Kupplung mit einem in einem Backraum befindlichen Backgutträger ausgebildet ist. Das Kupplungselement ist also derart ausgebildet, dass es in einen Backraum hineinragen kann, um mit dem darin befindlichen Backgutträger wahlweise gekoppelt zu werden. "Wahlweise" bedeutet in diesem Zusammenhang, dass die Kupplung zwischen Kupplungselement und Backgutträger allein durch das Kupplungselement selbst hergestellt und gelöst werden kann. Die kann bspw. durch einen Aktuator am Kupplungselement erreicht werden.

Um dieses Koppeln zu vereinfachen, weist der Backgutträger vorzugsweise wenigstens einen Kupplungsbereich zum Zusammenwirken mit dem Kupplungselement an der von der Rückwand des Backraums entfernten Seite auf. Bei dem Kupplungselement kann es sich bspw. um ein Hakenelement handeln, welches in einen, als Vertiefung im Backgutträger ausgebildeten Kupplungsbereich wahlweise zusammenwirken kann. Das Hakenelement umfasst dazu vorzugsweise einen Aktuator, mit dem das Hakenelement in die Vertiefung eingeführt oder aus dieser herausgezogen werden kann.

Unabhängig von der letztendlichen Ausgestaltung des Kupplungselementes muss dieses Element zumindest derart ausgebildet sein, dass die Verfahrbarkeit eines Backgutträgers über die vom Etagenofen entfernte Seite des Ladertisches hinaus möglich ist, da sonst die geforderte Anschlagsfreiheit nicht mehr gegeben wäre.

Es ist bevorzugt, wenn die Backgutträger wenigstens einen weiteren Kupplungsbereich an der zur Rückwand des Backraums nahen Seite und/oder zwischen der von der Rückwand des Backtraums entfernten Seite und der zur Rückwand des Backraums nahen Seite aufweist. Letzterer wenigstens ein weiterer Kupplungsbereich ist vorzugsweise mittig zwischen den genannten Seiten angeordnet. Durch entsprechende weitere Kupplungsbereiche ist es möglich, einen Backgutträger in zwei oder mehreren Schritten aus einem Backraum hinauszuziehen, wobei das Kupplungselement zunächst mit dem Kupplungsbereich an der von der Rückwand des Backraums entfernten Seite zusammenwirkt, um nach dem teilweisen Herausziehen des Backgutträgers aus dem Backraum mit einem oder mehreren weiteren Kupplungsbereich(en) zusammenzuwirken. In diesem Fall ist der durch die Horizontalfördereinheit zu erreichende Förderweg kürzer, weshalb die Horizontalfördereinheit kostengünstiger ausgestaltet werden kann. Insbesondere in den Fällen, in denen ein weiterer Kupplungsbereich an der zur Rückwand des Backraums nahen Seite des Backgutträgers angeordnet ist, kann der Backgutträger über die Horizontalfördereinheit auch wenigstens teilweise in die Backgutträgeraufnahme der Beschickungsvorrichtung verfahren werden. Durch Koppeln des Kupplungselements mit einem entsprechenden Kupplungsbereich ist ein Verschieben des Backgutträgers über die von dem Etagenofen entfernten Seite des Ladertisches möglich.

Es ist bevorzugt, wenn die Beladevorrichtung ein umlaufendes Laderband umfasst, dessen Geschwindigkeit an die Geschwindigkeit eines aus der Backgutträgeraufnahme heraus verfahrenen Backgutträgers anpassbar ist. Mit einem entsprechenden Laderband können darauf befindliche Teiglinge auf dem Backgutträger abgelegt werden. Indem die Geschwindigkeit des Laderbands an diejenige des Backgutträgers angepasst ist, erfährt ein Teigling beim Übergang vom Laderband auf den Backgutträger keine Geschwindigkeitsänderung. Das Laderband kann auch zu den Zeiten, in denen sich kein Backgutträger in der Backgutträgeraufnahme befindet, mit Teiglingen bestückt werden.

Es ist bevorzugt, wenn an der von dem Etagenofen entfernten Seite der Beschickungsvorrichtung eine Aufgabevorrichtung zur Aufgabe von Backgut auf die Beladevorrichtung vorgesehen ist, die vorzugsweise ein umlaufendes Förderband zum Aufkrabbeln von Backwaren von einer Platte umfasst. Durch eine entsprechende Aufgabevorrichtung kann die Bestückung der Beladevorrichtung vereinfacht werden, bspw. indem der Aufgabevorrichtung Bleche o.ä. mit darauf befindlichen Teiglingen zugeführt werden, die von dort aufgekrabbelt und an die Beladevorrichtung überführt werden. Für die entsprechende Bestückung der Beladevorrichtung muss sich kein Backgutträger in der Backgutträgeraufnahme befinden. Vielmehr kann die Bestückung auch während der Zeit erfolgen, in der ein Backgutträger bereitgestellt wird.

Die Backgutträgeraufnahme der Beschickungsvorrichtung kann eine Antriebsvorrichtung zum Verfahren von in ihr befindlichen Backgutträgern aufweisen. Es ist aber auch möglich, dass die Backgutträgeraufnahme antriebsfrei ist. Letzteres gilt insbesondere für die Fälle, in denen die Horizontalfördereinheit des Ladertisches geeignet ist, einen Backgutträger ausreichend weit in die Backgutträgeraufnahme zu verfahren. Auf einen Antrieb der Backgutträgeraufnahme und die dazugehörige Steuerung kann dann verzichtet werden.

Die Beschickungsvorrichtung ist vorzugsweise als mobile Einheit ausgestaltet. Dazu kann sie bspw. mit Bodenrollen ausgestattet sein. Durch die Ausgestaltung als mobile Einheit kann die Beschickungsvorrichtung an mehreren Etagenöfen, die jeweils einen Auszuglader aufweisen, zum Einsatz kommen.

Es ist bevorzugt, wenn der Ladertisch und die Beschickungsvorrichtung in horizontaler Projektion im Wesentlichen deckungsfrei sind und/oder der Bereich unterhalb des Ladertisches bis zum Boden im Wesentlichen frei ist. Sind Ladertisch und Beschickungsvorrichtung bei einer entsprechenden Projektion auf eine horizontale Ebene im Wesentlichen "deckungsfrei", liegt keine Überschneidung von Ladertisch und Beschickungsvorrichtung vor. In der Folge wird die vertikale Verfahrbarkeit des Ladertisches durch die Beschickungsvorrichtung nicht eingeschränkt. Ist der Bereich unterhalb des Ladertisches bis zum Boden im Wesentlichen frei, besteht bei einem ausreichend hoch verfahrenen Ladertisch ein Durchgang. Insbesondere in Zeiten, in denen der Etagenofen oder zumindest der Auszuglader nicht in Betrieb ist, kann dieser Durchgang frei genutzt werden, was insbesondere in beengten Backstuben vorteilhaft sein kann.

Es ist bevorzugt, wenn der Bereich des Ladertisches und der Beschickungsvorrichtung von einem Schutzgitter umgeben ist, sodass die Beschickungsvorrichtung nur an der von dem Etagenofen entfernten Seite und/oder im Bereich der Aufgabevorrichtung zugänglich ist. Ist insbesondere der Bereich des Ladertisches durch ein entsprechendes Schutzgitter geschützt, kann der Ladertisch ohne Sicherheitsbedenken mit erhöhter Geschwindigkeit vertikal verfahren werden.

Es ist bevorzugt, wenn das Schutzgitter im Bereich des Auszugladers zwei gegenüberliegende Türen aufweist und eine Steuerungseinheit vorgesehen ist, welche die Maximalgeschwindigkeit des vertikalen Verfahrens des Ladertisches in Abhängigkeit von der Stellung der Türen vorgibt. Sind die beiden Türen geschlossen, ist eine erhöhte Geschwindigkeit beim vertikalen Verfahren möglich. Ist eine der beiden Türen geöffnet, erfolgt das vertikale Verfahren des Ladertisches aus Sicherheitsgründen nur mit reduzierter Geschwindigkeit. Die Türen ermöglichen zum einen das manuelle Beladen eines auf dem Ladertisch befindlichen Backgutträger, zum anderen die Schaffung eines Durchgangs bei einem ausreichend hoch verfahrenen Ladertisch. Die reduzierte Geschwindigkeit kann zwischen 150 und 250 mm/s, vorzugsweise bei ca. 200 mm/s liegen. Die erhöhte Geschwindigkeit kann ca. das Dreifache der reduzierten Geschwindigkeit betragen.

Die Erfindung wir nun anhand vorteilhafter Ausführungsformen unter Bezugnahme auf die beigefügten Zeichnungen beispielhaft beschrieben. Es zeigen:
Figur 1: eine schematische Draufsicht eines ersten Ausführungsbeispiels eines erfindungsgemäßen Etagenofens;
Figur 2: eine schematische Schnittansicht des Etagenofens aus Figur 1; und
Figur 3a-g: Darstellung eines typischen Beschickungsvorgangs des Etagenofens gemäß Figuren 1 und 2.

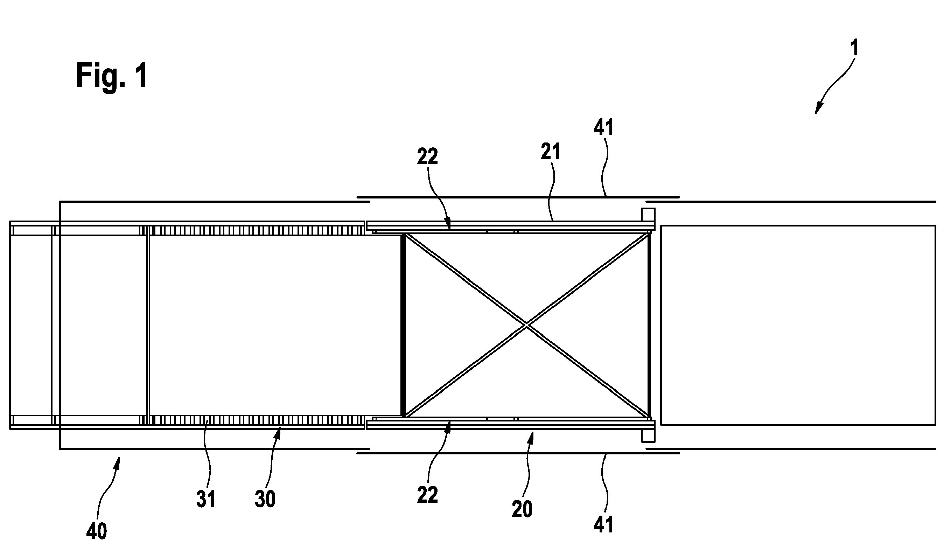

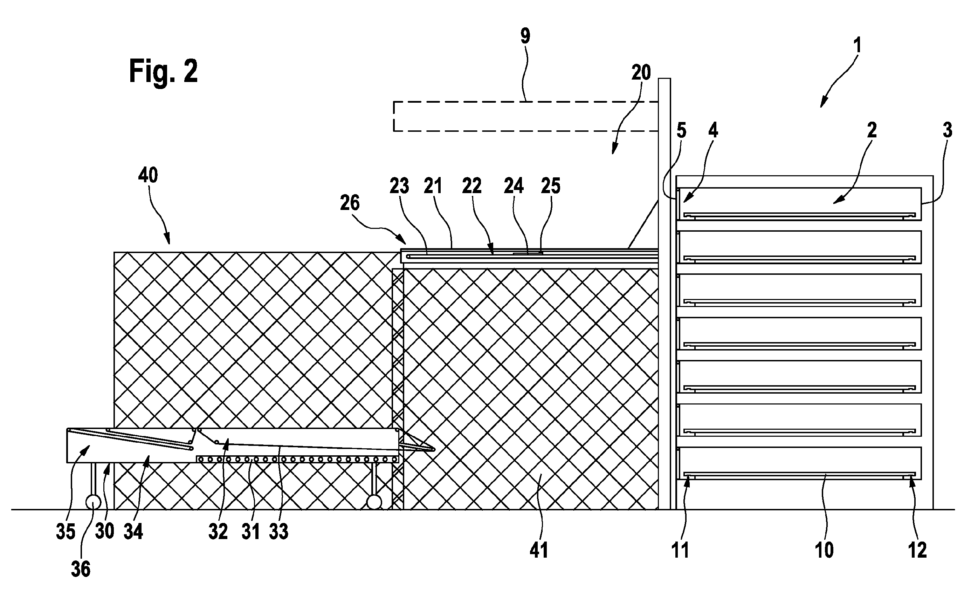

In Figur 1 ist ein erstes Ausführungsbeispiel eines erfindungsgemäßen Etagenofens 1 in einer Draufsicht schematisch dargestellt. Figur 2 zeigt eine schematische Schnittansicht des Etagenofens 1.

Der Etagenofen 1 umfasst mehrere übereinander angeordnete Backräume 2. Jeder Backraum 2 hat eine geschlossene Rückwand 3 und eine gegenüber der Rückwand 3 angeordnete vordere Backraumöffnung 4. Die vordere Backraumöffnung 4 ist durch eine Backraumklappe 5 verschließbar. Jeder Backraum 2 kann individuell durch ein nicht dargestelltes Heizsystem beheizt werden, wobei die Ober- und Unterhitze für jeden Backraum 2 individuell einstellbar ist. Das Heizsystem kann bspw. ein Thermoölheizsystem sein.

In den Backräumen 2 ist jeweils ein Backgutträger 10 zur Aufnahme von Teiglingen vorgesehen. Die Backgutträger 10 lassen sich durch die Backraumöffnung 4 vollständig aus den jeweiligen Backräumen 2 herausziehen. An der von der Rückwand 3 des Backraums 2 entfernten Seite eines jeden Backgutträgers 10 ist ein erster Kupplungsbereich 11 vorgesehen. Der Kupplungsbereich 11 ist dabei als Vertiefung an der Unterseite des Backgutträgers 10 ausgestaltet. An der der Rückwand 3 des Backraums 2 naheliegenden Seite des Backgutträgers 10 ist ein zum ersten Kupplungsbereich analog ausgestalteter weiterer Kupplungsbereich 12 vorgesehen. Der Backgutträger 10 ist an seiner zur Ablage von Teiglingen ausgebildeten Oberseite aus Stein. Weiterhin ist ein Auszugslader 20 vorgesehen, der einen vertikal verfahrbaren Ladertisch 21 aufweist. An dem Ladertisch 21 ist eine Horizontalfördereinheit 22 vorgesehen, die zum vollständigen Herausziehen eines Backgutträgers 10 aus einem Backraum 2 des Etagenofens 1 auf den Ladertisch 21 ermöglicht. Selbstverständlich lässt sich durch die Horizontalfördereinheit 22 ein auf dem Ladertisch 21 befindlicher Backgutträger 10 wieder vollständig in einen Backraum 2 des Etagenofens 1 einschieben. Die Horizontalfördereinheit 22 umfasst zu beiden Seiten des Ladertisches 21 jeweils eine Förderkette 23 mit einem daran befestigten Kupplungselement 24. Das Kupplungselement 24 ist dabei so ausgebildet, dass es beim entsprechenden Verfahren der Förderkette 23 in einen Backraum 2 des Etagenofens 1 soweit hineinragt, dass ein an dem Kupplungselement 24 angeordneter Aktuator 25 in die Vertiefung des ersten Kupplungsbereiches 11 wahlweise eingreifen kann.

Das Kupplungselement 24 kann bei einem vollständig auf dem Ladertisch 21 aufliegenden Backgutträger 10 auch mit dem weiteren Kupplungsbereich 12 gekoppelt werden. Ist eine entsprechende Kopplung erfolgt, kann der Backgutträger 10 durch entsprechendes Verfahren der Förderkette 23 über die von dem Etagenofen 1 abgewandte Seite 26 des Ladertisches 21 hinaus gefördert werden. Der Ladertisch 21 ist an eben dieser Seite 26 nämlich anschlagsfrei.

Oberhalb des Auszugladers 20 ist in Figur 2 eine Entladevorrichtung 9 angedeutet. Aus dem Stand der Technik sind entsprechende Entladevorrichtungen 9 bekannt, mit denen fertig gebackene Backwaren von einem Backgutträger 10 automatisiert entladen werden können. Dazu wird der mit Backwaren beladene Backgutträger 10 mit Hilfe des Ladertisches 21 vertikal an die Entladevorrichtung 9 herangefahren, woraufhin dann der automatisierte Entladevorgang beginnen kann.

Es ist weiterhin eine Beschickungsvorrichtung 30 vorgesehen, die so ausgebildet und angeordnet ist, dass sie in horizontaler Projektion (vgl. Figur 1) deckungsfrei mit dem Ladertisch 21 ist. In anderen Worten wird die vertikale Verfahrbarkeit des Ladertisches 21 durch die Beschickungsvorrichtung 30 nicht eingeschränkt. Insbesondere kann der Ladertisch 21 also aus der in Figur 2 dargestellten Position derart an der Beschickungsvorrichtung 30 vorbei verfahren werden, dass der Backgutträger 10 aus dem untersten Backraum 2 des Etagenofens 1 herausgezogen werden kann. In Figur 1 ist dies daran zu erkennen, dass es in dieser Darstellung keine Überschneidung von Ladertisch 21 und Beschickungsvorrichtung 30 gibt.

Die Beschickungsvorrichtung 30 ist gleichzeitig so angeordnet, dass ein Backgutträger 10 von der Horizontalfördereinheit 22 über die vom Etagenofen 1 abgewandte Seite 26 des Ladertisches 21 hinaus wenigstens teilweise in eine Backgutträgeraufnahme 31 der Beschickungsvorrichtung 30 geschoben werden kann. Die Backgutträgeraufnahme 31 ist dabei als Rollenbahn ohne Antrieb ausgestaltet.

Oberhalb der Backgutträgeraufnahme 31 ist eine Beladevorrichtung 32 mit einem umlaufenden Laderband 33 vorgesehen. Das Laderband 33 ist dabei so ausgestaltet, dass darauf befindliche Teiglinge auf ein unter dem Laderband 33 in der Backgutträgeraufnahme 31 bewegten Backgutträger 10 abgelegt werden können.

An der von dem Etagenofen 1 entfernten Seite 34 der Beschickungsvorrichtung 30 ist weiterhin eine Aufgabevorrichtung 35 vorgesehen. Die Aufgabevorrichtung 35 ist dazu ausgebildet, Teiglinge von ihr zugeführten Paletten, Platten oder Tabletts aufzukrabbeln und an das Laderband 33 der Beladevorrichtung zu übergeben.

Der Etagenofen 1 ist vollständig von einem Schutzgitter 40 umgeben. Lediglich die Aufgabevorrichtung 35 ist von außerhalb des Schutzgitters 40 zugänglich (siehe Figur 2). Weiterhin weist das Schutzgitter 40 im Bereich des Auszugladers 20 zwei Schiebetüren 41 auf. Die Schiebetüren 41 gestatten die manuelle Belegung eines auf dem Ladertisch 21 befindlichen Backgutträgers 10, bspw. mit Teiglingen, die sich nicht zur Beladung über das Laderband 33 der Beladevorrichtung 32 eignen. Die Stellung der Schiebetüren 41 wird dabei über eine (nicht dargestellte) Steuerungseinheit überwacht. Die Steuerungseinheit ist dazu ausgebildet, die maximale Geschwindigkeit beim vertikalen Verfahren des Ladertisches 21 in Abhängigkeit von der Stellung der Schiebetüren 41 vorzugeben. Sind beide Schiebetüren 41 geschlossen, beträgt die maximale Geschwindigkeit für das vertikale Verfahren des Ladertisches 21 im dargestellten Ausführungsbeispiel 600 mm/s. Ist eine der Schiebetüren 41 geöffnet, wird diese Maximalgeschwindigkeit auf 200 mm/s festgelegt.

Befindet sich der Ladertisch 21 in der in Figur 2 dargestellten Position, kann der Bereich unterhalb des Ladertisches 21 bei geöffneten Schiebetüren 41 als Durchgang genutzt werden. Dies ist insbesondere deshalb möglich, da bei dem dargestellten Ausführungsbeispiel der Bereich zwischen Ladertisch 21 und Boden frei ist.

Die Beschickungsvorrichtung 30 ist als mobile Einheit ausgestaltet und verfügt hierzu über Bodenrollen 36. Dadurch kann die Beschickungsvorrichtung 30 an mehreren Etagenöfen 1, die jeweils einen Auszuglader 20 aufweisen, zum Einsatz kommen. Bei einer entsprechenden mobilen Verwendung ist im Regelfall allerdings kein Schutzgitter 40 vorgesehen. In der dargestellten Ausführungsform ermöglicht die mobile Ausgestaltung der Beschickungsvorrichtung 30 insbesondere eine einfache Reinigung des Bereichs innerhalb des Schutzgitters. Zu Reinigungszwecken kann die Beschickungsvorrichtung 30 nämlich einfach beiseite gefahren werden.

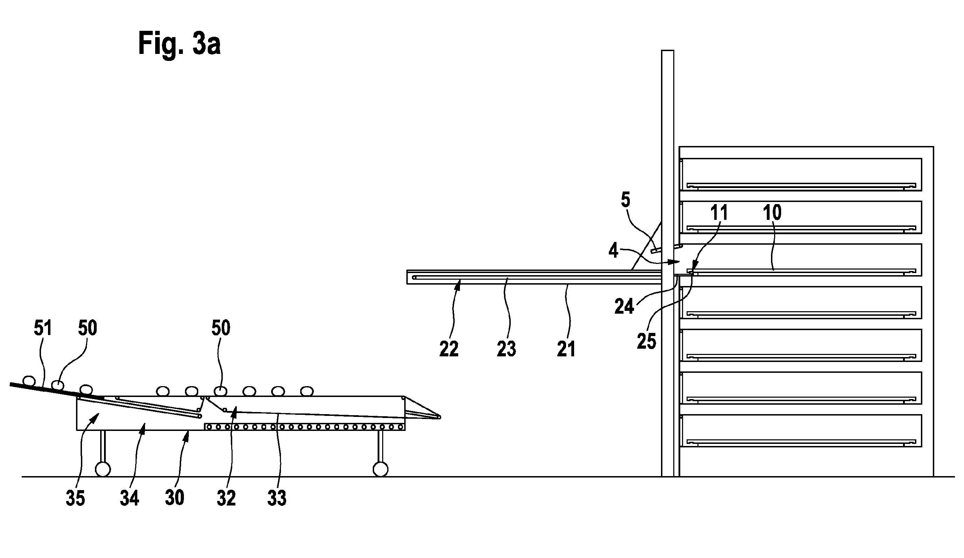

Der Etagenofen 1 gemäß der Figuren 1 und 2 wird nun anhand eines typischen Beschickungsvorgangs unter Bezugnahme auf die Figuren 3a-g näher erläutert. Dabei wurde aus Gründen der Übersichtlichkeit bei den Figuren 3a-g auf die Darstellung des Schutzgitters 40 und der Entladevorrichtung 9 verzichtet.

In Figur 3a ist die Backraumklappe 5 an der vorderen Backraumöffnung 4 desjenigen Backraums 2, der mit den Teiglingen 50 beschickt werden soll, geöffnet. Weiterhin ist der Ladertisch 21 auf eine solche vertikale Höhe verfahren, dass der Backgutträger 10 auf den Ladertisch 21 gezogen werden kann. Zu diesem Zweck ist die Förderkette 23 der Horizontalfördereinheit 22 so verfahren, dass das Kupplungselement 24 mit seinem Aktuator 25 in die Vertiefung des ersten Kupplungsbereichs 11 des Backgutträgers 10 eingreifen kann.

Währenddessen befinden sich bereits einige Teiglinge 50 auf der Beladevorrichtung 32 der Beschickungsvorrichtung 30 bzw. werden von der Aufgabevorrichtung 35 an die Beladevorrichtung 32 durch paralleles Betreiben des Förderbandes der Aufgabevorrichtung 35 und des Laderbandes 33 übergeben. Weitere Teiglinge 50 werden der Aufgabevorrichtung 35 über ein Tablett 51 zugeführt.

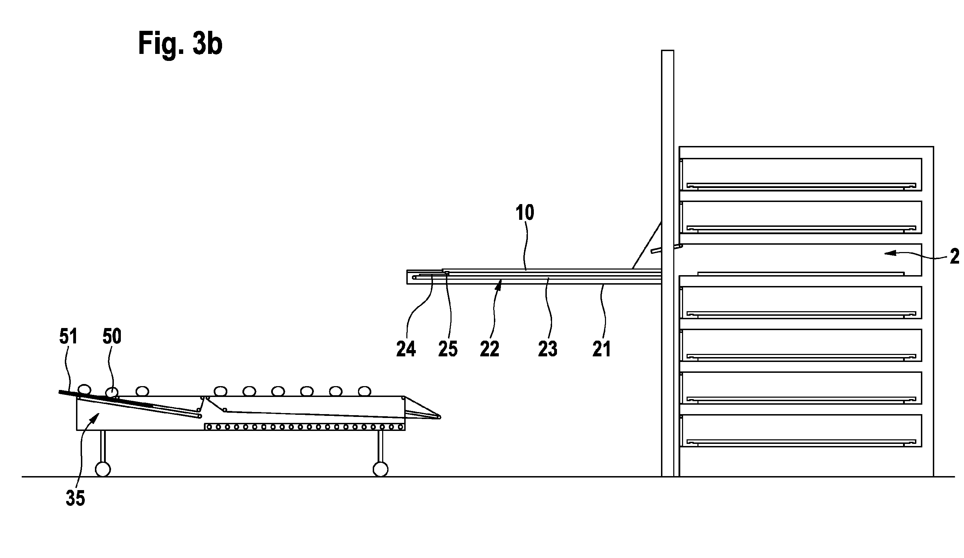

In Figur 3b ist der Backgutträger 10 durch die Horizontalfördereinheit 22 vollständig aus dem Backraum 2 herausgezogen. Der Aktuator 25 des Kupplungselements 24 ist bereits wieder gelöst.

Das Tablett 51 mit den weiteren Teiglingen 50 wird in die Aufgabevorrichtung 35 eingeschoben. Dabei werden die Teiglinge 50 von dem Förderband der Aufgabevorrichtung 35 aufgekrabbelt.

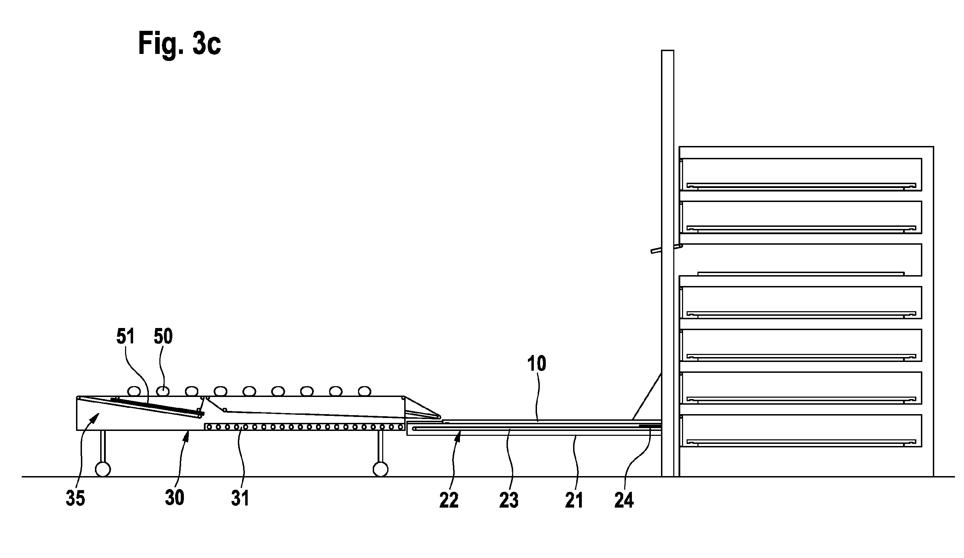

In Figur 3c ist der Ladertisch 21 derart vertikal verfahren, dass der darauf befindliche Backgutträger 10 zum Einschieben in die Backgutträgeraufnahme 31 der Beschickungsvorrichtung 30 ausgerichtet ist. Die Förderkette 23 der Horizontalfördereinheit 22 so verfahren, dass das Kupplungselement 24 mit seinem Aktuator 25 in die Vertiefung des weiteren Kupplungsbereichs 12 des Backgutträgers 10 eingreifen kann. Unterdessen sind sämtliche Teiglinge 50 von dem Tablett 51 durch die Aufgabeeinrichtung 35 aufgekrabbelt.

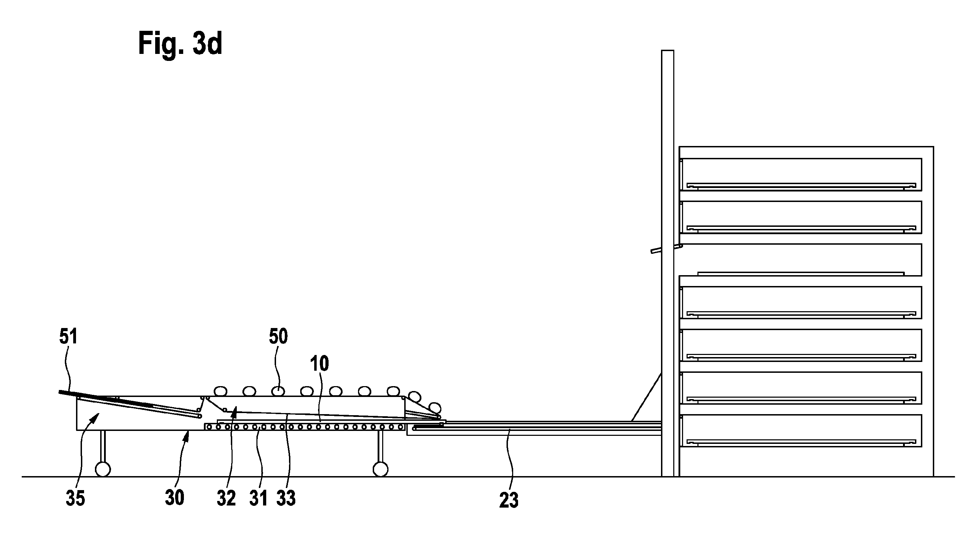

In Figur 3d ist der Backgutträger 10 durch die Horizontalfördereinheit 22 in die Backgutträgeraufnahme 31 der Beschickungsvorrichtung 30 eingeschoben. Die zuvor aufgekrabbelten Teiglinge 50 sind von der Aufgabevorrichtung 35 an das Laderband 33 der Beladevorrichtung 32 übergeben. Das nunmehr leere Tablett 51 wird entnommen.

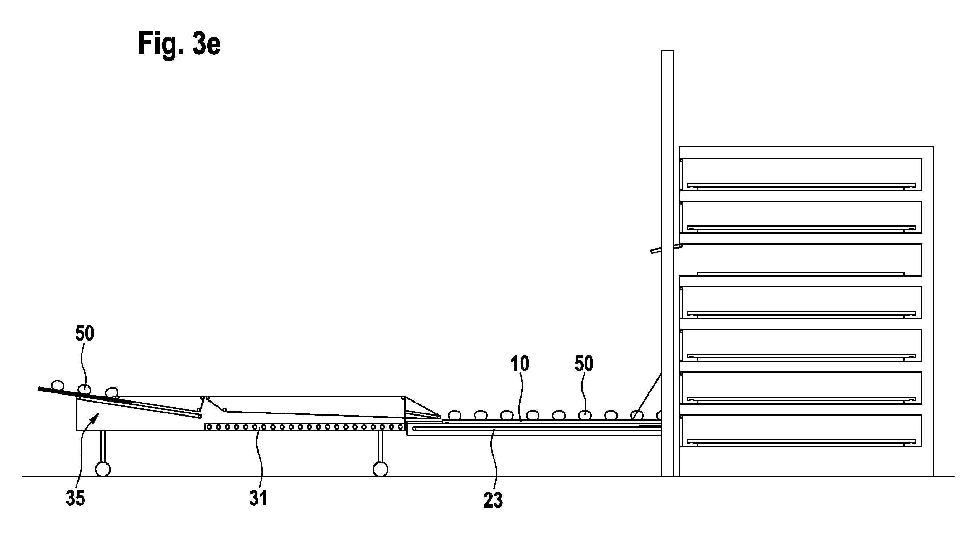

Anschließend wird der Backgutträger 10 durch die Horizontalfördereinheit 22 wieder aus der Backgutträgeraufnahme 31 heraus auf den Ladertisch 21 gezogen. Gleichzeitig wird das Laderband 33 der Beladevorrichtung 32 in einer solchen Geschwindigkeit bewegt, dass die Teiglinge 50 von dem Laderband 33 auf den Backgutträger 10 übergeben werden, ohne dass die Teiglinge dabei eine Geschwindigkeitsänderung erfahren. Das Ende dieses Beladevorgangs ist in Figur 3e gezeigt. Während des Beladevorgangs können - wie ebenfalls in Figur 3e zu sehen - bereits weitere Teiglinge 50 an der Aufgabeeinrichtung 35 aufgegeben werden.

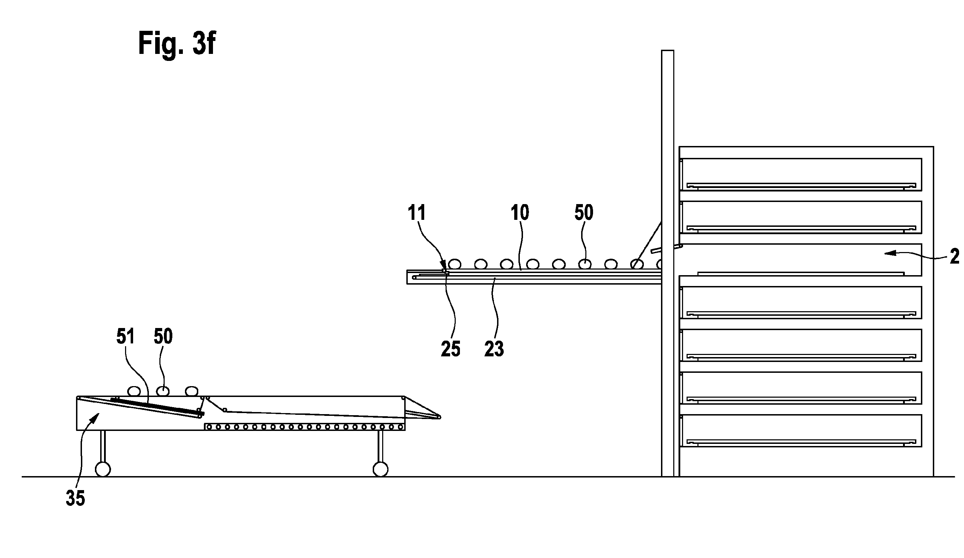

Anschließend wird der Ladertisch 21 mit dem darauf befindlichen, nunmehr mit Teiglingen beladenen Backgutträger 10 wieder auf Höhe des Backraums 2 verfahren, aus dem der Backgutträger 10 zuvor herausgezogen wurde. Unterdessen wird die Horizontalfördereinheit 22 wieder so verfahren, dass der Aktuator 25 in die Vertiefung des ersten Kupplungsbereichs 11 des Backgutträgers 10 eingreift. Entsprechendes ist in Figur 3f dargestellt.

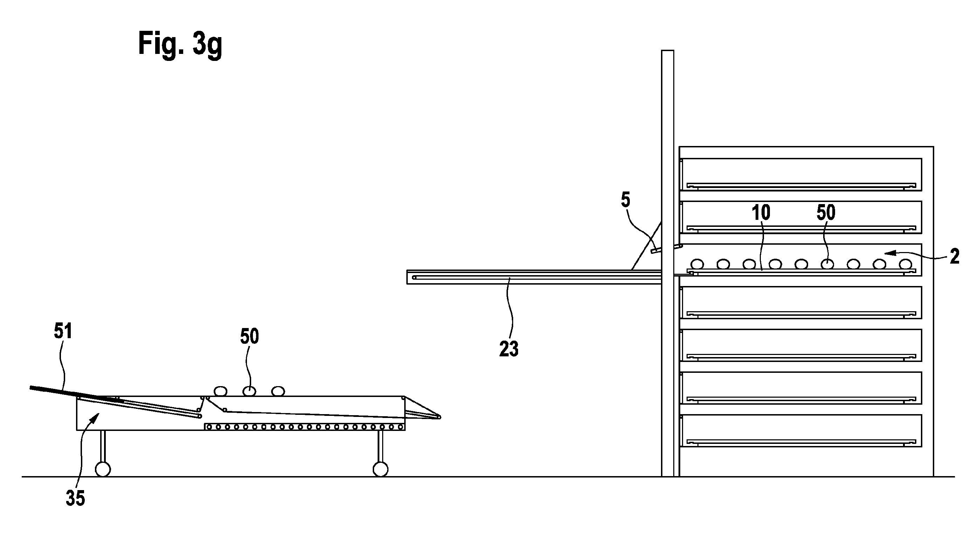

Abschließend wird der Backgutträger 10, wie in Figur 3g dargestellt, wieder in den Backraum 2 hineingeschoben. Nach Zurückziehen der Horizontalfördereinheit 22 aus dem Backraum 2 wird die Backraumklappe 5 geschlossen und die Teiglinge 50 auf dem Backgutträger 10 werden im Backraum 2 gebacken.

## Patentansprüche

1. Etagenofen (1) umfassend mehrere übereinander angeordnete Backräume (2) mit jeweils einem durch eine vordere Backraumöffnung (4) herausziehbaren Backgutträger (10) zur Aufnahme von Teiglingen (50) und einer gegenüber der Backraumöffnung (4) angeordneten Rückwand (2), und einen Auszugslader (20) mit einem vertikal verfahrbaren Ladertisch (21) und einer daran angeordneten Horizontalfördereinheit (22) zum vollständigen Herausziehen eines Backgutträgers (10) durch die Backraumöffnung (4) eines Backraums (2) auf den Ladertisch (21) sowie zum vollständigen Einschieben eines Backgutträgers (10) von dem Ladertisch (21) durch die Backraumöffnung (4) in einen Backraum (2),
**dadurch gekennzeichnet, dass**
der Ladertisch (21) für Backgutträger (10) auf der vom Etagenofen (1) abgewandten Seite (24) anschlagsfrei ist und eine Beschickungsvorrichtung (30) mit einer Backgutträgeraufnahme (31) zur wenigstens teilweisen Aufnahme eines Backgutträgers (10) und einer oberhalb der Backgutträgeraufnahme (31) angeordneten Beladevorrichtung (32) zum Beladen eines in der Backgutträgeraufnahme (31) befindlichen Backgutträgers (10) mit Teiglingen derart angeordnet ist, dass ein Backgutträger (10) vom Ladertisch (21) über die anschlagsfreie Seite (24) in einer vorgegebene vertikalen Position wenigstens teilweise in die Backgutträgeraufnahme (31) der Beschickungsvorrichtung (30) und aus dieser heraus verfahrbar ist.

2. Etagenofen nach Anspruch 1,
**dadurch gekennzeichnet, dass**
die Horizontalfördereinheit (22) ein Kupplungselement (24) umfasst, welches zur Kupplung mit einem in einem Backraum (2) befindlichen Backgutträger (10) ausgebildet ist, wobei der Backgutträger (10) vorzugsweise wenigstens einen ersten Kupplungsbereich (11) zum Zusammenwirken mit dem Kupplungselement (24) an der von der Rückwand (3) des Backtraums (2) entfernten Seite aufweist.

3. Etagenofen nach Anspruch 1 oder 2,
**dadurch gekennzeichnet, dass**
der Backgutträger (10) wenigstens einen weiteren Kupplungsbereich (12) an der zur Rückwand (3) des Backraums (2) nahen Seite und/oder, vorzugsweise mittig, zwischen der von der Rückwand (3) des Backraums (2) entfernten Seite und der zur Rückwand (3) des Backraums (2) nahen Seite aufweist.

4. Etagenofen nach einem der vorhergehenden Ansprüche,
**dadurch gekennzeichnet, dass**
die Beladevorrichtung (32) ein umlaufendes Laderband (33) umfasst, dessen Geschwindigkeit an die Geschwindigkeit eines aus der Backgutträgeraufnahme (31) heraus verfahrenen Backgutträgers (10) anpassbar ist.

5. Etagenofen nach einem der vorhergehenden Ansprüche,
**dadurch gekennzeichnet, dass**
an der von dem Etagenofen (1) entfernten Seite der Beschickungsvorrichtung (30) eine Aufgabevorrichtung (35) zur Aufgabe von Teiglingen (50) auf die Beladevorrichtung (32) vorgesehen ist, die vorzugsweise ein umlaufendes Förderband zum Aufkrabbeln von Teiglingen (50) von einer Platte (51) umfasst.

6. Etagenofen nach einem der vorhergehenden Ansprüche,
**dadurch gekennzeichnet, dass**
die Backgutträgeraufnahme (31) der Beschickungsvorrichtung (30) eine Antriebsvorrichtung zum Verfahren von in ihr befindlichen Backgutträgern (10) aufweist oder antriebsfrei ist.

7. Etagenofen nach einem der vorhergehenden Ansprüche,
**dadurch gekennzeichnet, dass**
die Beschickungsvorrichtung (30) als mobile Einheit ausgebildet ist.

8. Etagenofen nach einem der vorhergehenden Ansprüche,
**dadurch gekennzeichnet, dass**
der Ladertisch (21) und die Beschickungsvorrichtung (30) in horizontaler Projektion im Wesentlichen deckungsfrei sind.

9. Etagenofen nach einem der vorhergehenden Ansprüche,
**dadurch gekennzeichnet, dass**
der Bereich des Ladertisches (21) und der Beschickungsvorrichtung (30) durch ein Schutzgitter (40) umgeben sind, sodass die Beschickungsvorrichtung (30) nur an der von dem Etagenofen (1) entfernten Seite und/oder im Bereich der Aufgabevorrichtung (35) zugänglich ist.

10. Etagenofen nach dem vorhergehenden Anspruch,
**dadurch gekennzeichnet, dass**
das Schutzgitter (40) im Bereich des Auszugladers (20) zwei gegenüberliegende Türen (41) aufweist und eine Steuerungseinheit vorgesehen ist, welche die Maximalgeschwindigkeit des vertikalen Verfahrens des Ladertisches (21) in Abhängigkeit von der Stellung der Türen (41) vorgibt.
